# EUROPEAN PATENT APPLICATION

(11) **EP 3 542 881 A1**
(43) Date of publication of application: **25.09.2019**
(21) Application number: 17871907.6
(22) Date of filing: 22.06.2017
(51) Int. Cl.: B01D 1/22, F25B 39/02

(54) **TUBE SHELL TYPE FALLING-FILM EVAPORATOR AND WATER CHILLING UNIT**

(30) Priority: 18.11.2016 CN 201611018863
(71) Applicant: Chongqing Midea General Refrigeration Equipment Co., Ltd., Chongqing 401336 (CN)
(72) Inventor: LUO, Rongjun, Nan'an District, Chongqing 401336 (CN)
(74) Representative: Maucher Jenkins Patent- und Rechtsanwälte
(86) International application number: PCT/CN2017/089639
(87) International publication number: WO 2018/090625

(57) **Abstract**

Disclosed are a shell-and-tube falling film evaporator and a water chilling unit. The evaporator comprises a shell (1). The shell (1) is filled with a refrigerant. A refrigerant distributor (7) is arranged on the upper side in the shell, and a heat exchange tube distribution region is arranged below the refrigerant distributor (7). The heat exchange tube distribution region includes a first tube distribution region (11) and a second tube distribution region (12). The second tube distribution region (12) is located below the first tube distribution region (11), with gap between the first tube distribution region (11) and the second tube distribution region (12). A plurality of first heat exchange tubes (2) are horizontally arranged in the first tube distribution region (11). A plurality of second heat exchange tubes (3) are horizontally arranged in the second tube distribution region (12). The outer diameter of each first heat exchange tubes (2) is smaller than the outer diameter of each second heat exchange tubes (3).

## Description

### FIELD

The present disclosure relates to a technical field of falling film evaporators, and particularly to a shell-and-tube falling film evaporator and to a water chilling unit.

### BACKGROUND

Falling film evaporators in the existing water chiller products mainly have the following forms.

### 1. Full falling film evaporator

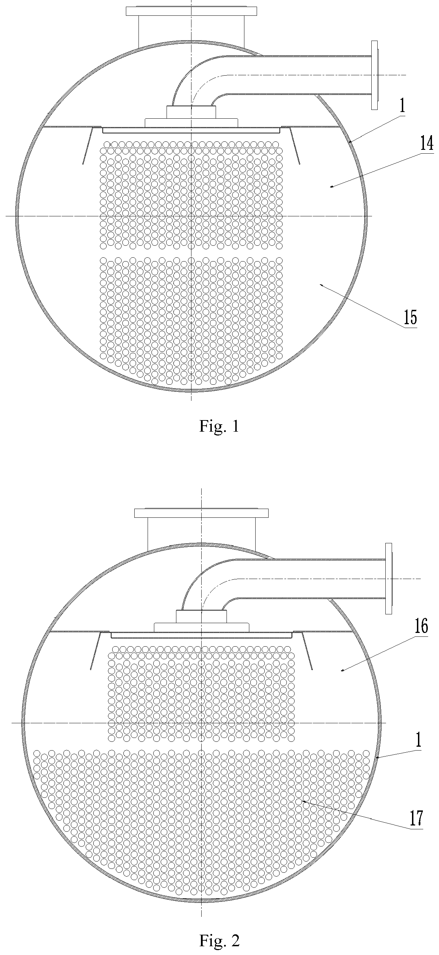

As illustrated in Fig. 1, a tube distribution region in such an evaporator includes an upstream falling-film tube distribution region 14 and a downstream falling-film tube distribution region 15, and a heat exchange tube in the upstream falling-film tube distribution region 14 has an outer diameter equal to that of a heat exchange tube in the downstream falling-film tube distribution region 15. For example, the outer diameters of the heat exchange tubes of the upstream falling-film tube distribution region 14 and the downstream falling-film tube distribution region 15 are both 25.4 mm or 19.05 mm or in other sizes.

The full falling film evaporator has the following disadvantages. First, a heat exchange tube in the bottommost layer of the falling-film tube distribution region is easy to dry, and a heat transfer area cannot be fully utilized. Second, the degree of suction superheat of a water chilling unit is difficult to control, and there is a risk of entrained liquid. Third, heat exchange in the upstream and downstream of the evaporator of the water chilling unit is not balanced, resulting in a poor overall heat transfer coefficient. Fourth, a liquid level in the evaporator of the water chilling unit and the supply amount of a liquid refrigerant are not well controlled, resulting in poor regulation of the refrigeration capacity. Fifth, the liquid level in the evaporator of the water chilling unit and the amount of refrigerant supply are not well controlled, and a position of a return oil ejection and extraction port cannot be accurately designed and determined, leading to an unsatisfactory oil return effect. Sixth, the water chilling unit has poor adaptability to all working conditions, and the adaptability is not good under various working conditions.

### 2. Hybrid falling film evaporator

A tube distribution region in such an evaporator includes an upstream tube distribution region 16 and a downstream flooded tube distribution region 17, and a heat exchange tube in the upstream tube distribution region 16 has an outer diameter equal to that of a heat exchange tube in the downstream flooded tube distribution region 17. For example, the outer diameters of the heat exchange tubes of the upstream tube distribution region 16 and the downstream flooded tube distribution region 17 are both 25.4 mm or 19.05 mm or in other sizes.

The hybrid falling film evaporator has the following disadvantages. First, a heat exchange tube in the bottommost layer of the upstream tube distribution region 16 of the evaporator of the water chilling unit is easy to dry, and a heat transfer area cannot be fully utilized. Second, the heat exchange effect of the upstream tube distribution region 16 of the evaporator of the water chilling unit has much to do with the distribution of the refrigerant, and also has something to do with the specification of the heat exchange tube, the tube arrangement, and the control over water velocity inside the tube. Third, the heat exchange effect of the downstream flooded tube distribution region 17 of the evaporator of the water chilling unit has much to do with the control over a liquid level of the refrigerant and the control over the amount of liquid for evaporation, and also has something to do with the specification of the heat exchange tube, the tube arrangement, and the control over water velocity inside the tube. Fourth, heat exchange in the upstream tube distribution region 16 and the downstream flooded tube distribution region 17 is not balanced, resulting in a poor overall heat transfer coefficient. Fifth, a liquid level in the evaporator of the water chilling unit and the amount of refrigerant supply are not well controlled, resulting in poor regulation of the refrigeration capacity. Sixth, the liquid level in the evaporator of the chilling unit and the amount of refrigerant supply are not well controlled, and the position of a return oil ejection and extraction port cannot be accurately designed and determined, leading to an unsatisfactory oil return effect. Seventh, the chilling unit has poor adaptability to all working conditions, and the adaptability is not good under various working conditions.

### SUMMARY

The technical problem to be solved by the present disclosure is to provide a shell-and-tube falling film evaporator and a water chilling unit, directed at the deficiencies in the related art.

Technical solutions to the above technical problem are presented as follows. A shell-and-tube falling film evaporator includes a shell, and the shell is filled with a refrigerant. A refrigerant distributor is provided at an upper side within the shell, and a region below the refrigerant distributor is configured as a heat exchange tube distribution region. The heat exchange tube distribution region includes a first tube distribution region and a second tube distribution region below the first tube distribution region, with a gap between the first tube distribution region and the second tube distribution region. A plurality of first heat exchange tubes are horizontally arranged in the first tube distribution region, and a plurality of second heat exchange tubes are horizontally arranged in the second tube distribution region, in which each first heat exchange tube has an outer diameter smaller than an outer diameter of each second heat exchange tube.

The present disclosure has the following beneficial effects. By configuring the outer diameter of the first heat exchange tube to be smaller than that of the second heat exchange tube, the first heat exchange tube has a smaller circumferential length and hence a smaller gap is defined in tube distribution, which facilitates the adhesion and formation of a circumferential liquid film to an outer surface of the heat exchange tube. Meanwhile, the formed film has a more uniform and continuous thickness, and an effective heat transfer area of the first tube distribution region can be fully and effectively utilized, thereby reducing the risk of local dry spot formation in the heat exchange tube. Moreover, the heat exchange tube in the bottommost layer of the first tube distribution region is not easy to dry, and the overall heat transfer coefficient is higher. In the second tube distribution region, the second heat exchange tube has a larger effective heat transfer area, such that in a flooded region of a refrigerant liquid level under limited control, a larger effective heat transfer area can be provided with the same number of heat exchange tubes, and meanwhile a larger gap is defined in the tube distribution,, which is conducive to the escape of a refrigerant gas generated by the evaporator, at a lower escape speed. The heat exchange in the first tube distribution region and the second tube distribution region of the present disclosure is relatively balanced, resulting in a greater overall heat transfer coefficient.

Based on the above technical solution, the present disclosure may have the following improvements.

Further, the outer diameter of each first heat exchange tube ranges from 9.52 mm to 25.4 mm, and the outer diameter of the second heat exchange tube ranges from 12.7 mm to 28.6 mm.

Further, a liquid level controller is provided and configured to regulate a liquid level of the refrigerant in the shell and fixedly connected to an outer wall of the shell.

The further technical solutions employed herein have the following beneficial effect. By providing the liquid level controller, the liquid level of the refrigerant in the shell of the evaporator and the amount of liquid for evaporation can be controlled effectively and reasonably to prevent the second heat exchange tubes in an upper part of the second tube distribution region from drying, so that the effective heat transfer area of the falling film evaporator can be utilized more effectively, raising the overall heat transfer coefficient and improving the heat transfer effect. Meanwhile, the liquid level within the shell of the evaporator and the amount of the refrigerant liquid for evaporation can be effectively controlled, so that a position of a return oil ejection and extraction port can be accurately designed and determined according to the dissolution characteristics of the refrigerant and the lubricating oil, resulting in a good oil return effect, and improving the heat exchange efficiency and the oil return performance of the unit.

Further, the shell is provided with at least one liquid input pipe and at least one exhaust pipe at positions corresponding to the first tube distribution region.

Further, the refrigerant covers the second heat exchange tubes, and the first heat exchange tubes are located above the liquid level of the refrigerant.

Further, the gap between the first tube distribution region and the second tube distribution region is greater than 10 mm.

Further, the liquid input pipe has a first end fixedly connected to an upper surface of the refrigerant distributor and a second end extending from the shell, and the exhaust pipe is in communication with a region in the shell and above the refrigerant distributor.

Further, the refrigerant distributor has two ends fixedly connected with an inner wall of the shell, and a baffle is connected between the refrigerant distributor and the shell and provided with a vent hole.

A chilling unit includes the shell-and-tube falling film evaporator described above.

The beneficial effect of the present disclosure lies in that the overall heat transfer coefficient of the chilling unit according to the present disclosure is higher, improving the heat transfer effect.

### BRIEF DESCRIPTION OF THE DRAWINGS

Fig. 1 illustrates a sectional view of a full falling film evaporator in the related art.
Fig. 2 illustrates a sectional view of a hybrid falling film evaporator in the related art.
Fig. 3 illustrates a sectional view of a hybrid falling film evaporator according to embodiments of the present disclosure.
Fig. 4 illustrates a sectional view of another implementation of a hybrid falling film evaporator according to embodiments of the present disclosure.

In the drawings, elements designated by reference numerals are presented as follows:
1 shell, 11 first tube distribution region, 12 second tube distribution region, 14 upstream falling-film tube distribution region, 15 downstream falling-film tube distribution region, 16 upstream tube distribution region, 17 downstream flooded tube distribution region, 2 first heat exchange tube, 3 second heat exchange tube, 4 liquid level controller, 41 mounting cylinder, 42 controller, 5 liquid input pipe, 6 exhaust pipe, 7 refrigerant distributor, 71 baffle.

### DETAILED DESCRIPTION

The principles and characteristics of the present disclosure are described below with reference to the accompanying drawings. The examples are only for illustrative purposes and shall not be constructed to limit the scope of the present disclosure.

### Embodiment 1

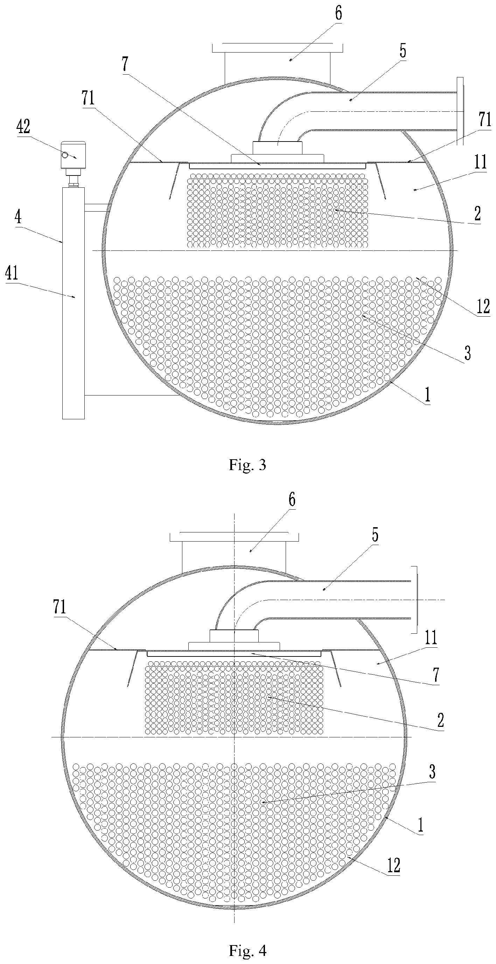

As illustrated in Figs. 3 and 4, a shell-and-tube falling film evaporator according to this embodiment includes a shell 1 filled with a refrigerant. This evaporator has one shell side and two tube sides, the refrigerant runs in the shell side, and water runs in the tube sides, in which a tube-side partition plate is provided in a water chamber at water input side of the tube sides. A refrigerant distributor 7 is provided at an upper side within the shell 1, a region below the refrigerant distributor 7 is a heat exchange tube distribution region, and a heat exchanger tube in which water runs is arranged in the heat exchange tube distribution region. The heat exchange tube distribution region includes a first tube distribution region 11 below the refrigerant distributor and a second tube distribution region 12 below the first tube distribution region 11, with a gap greater than 10 mm between the first tube distribution region 11 and the second tube distribution region 12. A plurality of first heat exchange tubes 2 are horizontally arranged in the first tube distribution region 11, a plurality of second heat exchange tubes 3 are horizontally arranged in the second tube distribution region 12, and each first heat exchange tube 2 has an outer diameter smaller than an outer diameter of each second heat exchange tube 3. In this embodiment, the gap between the first tube distribution region and the second tube distribution region is actually a distance between the lowermost first heat exchange tube in the first tube distribution region and the uppermost second heat exchange tube in the second tube distribution region. In the present embodiment, by configuring the outer diameter of the first heat exchange tube to be smaller than that of the second heat exchange tube, the first heat exchange tube has a smaller circumferential length and hence a smaller gap is defined in tube distribution, which facilitates the adhesion and formation of a circumferential liquid film to an outer surface of the heat exchange tube. Meanwhile, the formed film has a more uniform and continuous thickness, and an effective heat transfer area of the first tube distribution region can be fully and effectively utilized, thereby reducing the risk of local dry spot formation in the heat exchange tube. Moreover, the heat exchange tube in the bottommost layer of the first tube distribution region is not easy to dry, and the overall heat transfer coefficient is higher. In the second tube distribution region, the second heat exchange tube has a larger effective heat transfer area, such that in a flooded region of a refrigerant liquid level under limited control, a larger effective heat transfer area can be provided with the same number of heat exchange tubes, and meanwhile a larger gap is defined in the tube distribution, which is conducive to the escape of a refrigerant gas generated by the evaporator, at a lower escape speed. The heat exchange in the first tube distribution region and the second tube distribution region of the present disclosure is relatively balanced, resulting in a greater overall heat transfer coefficient.

In this embodiment, the outer diameter of the first heat exchange tube 2 ranges from 9.52 mm to 25.4 mm, and the outer diameter of the second heat exchange tube 3 ranges from 12.7 mm to 28.6 mm. For example, the outer diameter of the first heat exchange tube 2 is 19.05 mm, and the outer diameter of the second heat exchange tube 3 is 25.4 mm; or the outer diameter of the first heat exchange tube 2 is 16 mm, and the outer diameter of the second heat exchange tube 3 is 19.05 mm.

In another implementation of the shell-and-tube falling-film evaporator according to this embodiment, a liquid level controller 4 is also provided and configured to regulate a liquid level of the refrigerant in the shell 1, and the liquid level controller 4 is fixedly connected to an outer wall of the shell 1. The liquid level controller 4 includes a mounting cylinder 41 and a controller 42 mounted above the mounting cylinder 41, the mounting cylinder 41 is vertically arranged, and the mounting cylinder 41 has a lower end in communication with the second tube distribution region 12 and an upper end in communication with the first tube distribution region 11. By providing the liquid level controller, the liquid level of the refrigerant in the shell of the evaporator and the amount of liquid for evaporation can be controlled effectively and reasonably to prevent the second heat exchange tubes in an upper part of the second tube distribution region from drying, so that the effective heat transfer area of the falling film evaporator can be utilized more effectively, raising the overall heat transfer coefficient and improving the heat transfer effect. Meanwhile, the liquid level within the shell of the evaporator and the amount of the refrigerant liquid for evaporation can be effectively controlled, so that a position of a return oil ejection and extraction port can be accurately designed and determined according to the dissolution characteristics of the refrigerant and the lubricating oil, resulting in a good oil return effect, and improving the heat exchange efficiency and the oil return performance of the unit.

As illustrated in Figs. 3 and 4, the shell 1 according to this embodiment is cylindrical and horizontally arranged, the first heat exchange tubes 2 are located in a region above a horizontal plane where an axis of the shell 1 is, and the second heat exchange tubes 3 are located in a region below the horizontal plane where the axis of the shell 1 is. Alternatively, some first heat exchange tubes 2 are also located in the region below the horizontal plane where the axis of the shell 1 is. A gap between the lowermost first heat exchange tube 2 in the first tube distribution region 11 and the uppermost second heat exchange tube 3 in the second tube distribution region 12 enables the refrigerant vapor in the second tube distribution region to be quickly discharged and then discharged through an exhaust pipe.

As illustrated in Figs. 3 and 4, the shell 1 according to this embodiment is provided with at least one liquid input pipe 5 and at least one exhaust pipe 6 at positions corresponding to the first tube distribution region 11.

The falling film evaporator according to this embodiment is configured as a hybrid falling film evaporator, the second tube distribution region 12 is filled with the refrigerant that covers the second heat exchange tubes, and the first heat exchange tubes 2 are located above the liquid level of the refrigerant, that is, the second tube distribution region 12 is a flooded tube distribution region.

As illustrated in Figs. 3 and 4, the refrigerant distributor 7 is horizontally provided at the upper side within the shell 1 according to this embodiment, and the first tube distribution region 11 and the second tube distribution region 12 are both located below the refrigerant distributor 7. The liquid input pipe 5 has a first end fixedly connected to an upper surface of the refrigerant distributor 7 and a second end extending from the shell 1. The exhaust pipe 6 is in communication with a region in the shell 1 and above the refrigerant distributor 7.

As illustrated in Figs. 3 and 4, the refrigerant distributor 7 according to this embodiment has two ends fixedly connected with an inner wall of the shell 1, and a baffle 71 is connected between the refrigerant distributor 7 and the shell 1. The baffle 71 is provided with a vent hole. The baffle is not limited in shape, and may be rectangular, circular or oval.

The shell-and-tube falling film evaporator according to this embodiment is mainly applied in a water chilling unit, the refrigerant runs in the shell side, and the water runs in the tube pass. In this embodiment, the outer diameter of the first heat exchange tube is configured to be smaller than that of the second heat exchange tube, such that the gap in tube distribution in the first tube distribution region is different from the gap in tube distribution in the second tube distribution region. The small-diameter heat exchange tube inevitably makes the gap in tube distribution small, and the gap in tube distribution in the first tube distribution region is relatively small, which is more conductive to the adhesion and formation of a circumferential liquid film of the first heat exchange tube to the outer surface of the heat exchange tube during the heat exchange of the first tube distribution region. Meanwhile, the formed film has a more uniform and continuous thickness, and the effective heat transfer area of the first tube distribution region can be fully and effectively utilized, thereby reducing the risk of local dry spot formation in the heat exchange tube. Moreover, the heat exchange tube in the bottommost layer of the first tube distribution region is not easy to dry, and the overall heat transfer coefficient is higher, thereby improving the heat transfer coefficient and the heat transfer effect. Compared with the first heat exchange tubes, each of the second heat exchange tubes in the second tube distribution region has a larger effective heat transfer area, such that in a flooded region of a refrigerant liquid level under limited control, a larger effective heat transfer area can be provided with the same number of the second heat exchange tubes, and meanwhile a larger gap is defined in the tube distribution, which facilitates the escape of the refrigerant gas generated by the evaporator, at a lower escape speed. The heat exchange in the first tube distribution region and the second tube distribution region is relatively balanced, resulting in a greater overall heat transfer coefficient.

### Embodiment 2

A chilling unit according to this embodiment includes the shell-and-tube falling film evaporator according to embodiment 1. In the chilling unit according to this embodiment, after the throttled refrigerant enters the shell side of the evaporator from the liquid input pipe 5 at the top of the evaporator, the refrigerant absorbs heat and is converted into refrigerant vapor, and then is discharged from the evaporator through the exhaust pipe 6 to enter a compressor suction port. During the phase change of the refrigerant, the refrigerant exchanges heat with the water in the heat exchange tube, causing the temperature of the water to decrease, thereby producing cold water.

During the operation of the chilling unit, when the refrigerant is in the optimal state in the first tube distribution region, there is a uniform liquid film on each of the first heat exchange tubes, and the liquid film is continuous in both the circumferential direction and the axial direction, and is neither too thick nor too thin. If the liquid film is too thick, the thermal resistance against the heat transfer increases, and the evaporation of the refrigerant liquid at the gas-liquid interface is also be affected, thereby reducing the overall heat transfer coefficient. If the liquid film is too thin, the risk of local dry spot formation increases, thereby reducing the effective heat transfer area and deteriorating the heat transfer effect. In this embodiment, the outer diameters of the first heat exchange tube and the second heat exchange tube are designed reasonably, such that the liquid film on the first heat exchange tube in the first tube distribution region is evenly provided, and the refrigerant gas in the second tube distribution region escapes smoothly and quickly and does not stay in the second tube distribution region to affect the heat transfer of the heat exchange tubes, and the escape speed of the refrigerant is not too large and hence will not result in suction with entrained liquid.

In the description of the present disclosure, it is to be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," and "circumferential" should be construed to refer to the orientation or position relationship as then described or as shown in the drawings under discussion. These relative terms are for convenience of description and do not indicate or imply that the devices or elements have a particular orientation, or be constructed and operated in a particular orientation. Thus, these terms shall not be constructed to limit the present disclosure.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, the term "a plurality of' means at least two, such as two or three, etc., unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements or mutual interaction of two elements, which can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. Additionally, different embodiments or examples as well as features in different embodiments or examples described in the present disclosure can be combined by those skilled in the art without any contradiction.

Although embodiments have been shown and described, it would be appreciated by those skilled in the art that the above embodiments are explanatory and cannot be construed to limit the present disclosure, and changes, modifications, alternatives, and variations can be made in the embodiments without departing from the scope of the present disclosure.

## Claims

1. A shell-and-tube falling film evaporator, comprising a shell (1) filled with a refrigerant, wherein a refrigerant distributor (7) is provided at an upper side within the shell (1), and a region below the refrigerant distributor (7) is configured as a heat exchange tube distribution region; the heat exchange tube distribution region comprises a first tube distribution region (11) and a second tube distribution region (12) below the first tube distribution region (11), with a gap between the first tube distribution region (11) and the second tube distribution region (12); a plurality of first heat exchange tubes (2) are horizontally arranged in the first tube distribution region (11), and a plurality of second heat exchange tubes (3) are horizontally arranged in the second tube distribution region (12), wherein each first heat exchange tube (2) has an outer diameter smaller than an outer diameter of each second heat exchange tube (3).

2. The shell-and-tube falling film evaporator according to claim 1, wherein the outer diameter of each first heat exchange tube (2) ranges from 9.52 mm to 25.4 mm, and the outer diameter of the second heat exchange tube (3) ranges from 12.7 mm to 28.6 mm.

3. The shell-and-tube falling film evaporator according to claim 1 or 2, further comprising a liquid level controller (4) configured to regulate a liquid level of the refrigerant in the shell (1) and fixedly connected to an outer wall of the shell (1).

4. The shell-and-tube falling film evaporator according to any one of claims 1 to 3, wherein the shell (1) is provided with at least one liquid input pipe (5) and at least one exhaust pipe (6) at positions corresponding to the first tube distribution region (11).

5. The shell-and-tube falling film evaporator according to claim 4, wherein the refrigerant covers the second heat exchange tubes (3), and the first heat exchange tubes (2) are located above the liquid level of the refrigerant.

6. The shell-and-tube falling film evaporator according to claim 5, wherein the gap between the first tube distribution region (11) and the second tube distribution region (12) is greater than 10 mm.

7. The shell-and-tube falling film evaporator according to claim 6, wherein the liquid input pipe (5) has a first end fixedly connected to an upper surface of the refrigerant distributor (7) and a second end extending from the shell (1), and the exhaust pipe (6) is in communication with a region in the shell (1) and above the refrigerant distributor (7).

8. The shell-and-tube falling film evaporator according to claim 7, wherein the refrigerant distributor (7) has two ends fixedly connected with an inner wall of the shell (1), and a baffle (71) is connected between the refrigerant distributor (7) and the shell (1) and provided with a vent hole.

9. A chilling unit, comprising a shell-and-tube falling film evaporator according to any one of claims 1 to 8.
